Europäisches Patentamt

European Patent Office

Office européen des brevets

(19)

(11) Veröffentlichungsnummer· **0 054 572**
**B1**

(12) # EUROPÄISCHE PATENTSCHRIFT

(45) Veröffentlichungstag der Patentschrift:
27.06.84

(21) Anmeldenummer: 80108007.8

(22) Anmeldetag: 18.12.80

(51) Int. Cl.³: **B 01 J 47/14,** B 01 J 49/00,
C 02 F 1/42

(54) **Verfahren und Vorrichtung zur Kontrolle und Ergänzung des Salzvorrats bei Wasserenthärtern.**

(43) Veröffentlichungstag der Anmeldung:
30.06.82 Patentblatt 82/26

(45) Bekanntmachung des Hinweises auf die Patenterteilung:
27.06.84 Patentblatt 84/26

(84) Benannte Vertragsstaaten:
**AT BE FR IT LU NL**

(56) Entgegenhaltungen:
**DE - A - 1 792 488**
**DE - A - 2 403 624**
**FR - A - 2 252 783**
**US - A - 1 744 493**

(73) Patentinhaber: **FRIEDRICH GROHE
ARMATURENFABRIK GmbH & CO, Hauptstrasse 137,
D-5870 Hemer 1 (DE)**

(72) Erfinder: **Kiesewetter, Heinrich Wilhelm, Landwehr 72,
D-5750 Menden (DE)**

## Beschreibung

Die Erfindung betrifft ein Verfahren und eine Vorrichtung zur Durchführung des Verfahrens zur Überwachung des Salzvorrats im Vorratsbehälter eines Wasserenthärters. Zur Wasserenthärtung werden in der Regel Ionenaustauscher einegsetzt. Derartige Ionenaustauscher benötigen zur Regeneration der erschöpften Austauscherharzmassen eine Kochsalzlösung. Bei den heutigen im Markt verfügbaren Geräten wird die Kochsalzlösung in dem Gerät selbst zubereitet. Zu jedem Wasserenthärter ist daher ein Salzvorratsbehälter zugeordnet, der bei Inbetriebnahme des Geräts mit Salz gefüllt wird. In dem gefüllten Salzbehälter wird in der Regel mit Hilfe einer Schwimmersteuereinrichtung Wasser bis zu einem bestimmten Pegelstand eingefüllt. Diese Wassermenge löst bis zur Sättigungsgrenze Salz, so daß bei Erschöpfung der Ionenaustauscherharze die eingefüllte Wassermenge nunmehr als konzentrierte Salzsole über ein Injektorsystem abgesaugt und über die Harzmasse geleitet, wodurch diese erneut mit Natrium beladen und zum weiteren Ionenaustausch befähigt wird. Nachdem die vorhandene Salzsole abgesaugt ist, wird über eine Schwimmereinrichtung die Soleleitung geschlossen, und nur das vorher zum Ansaugen der Sole über den Injektor benötigte Treibwasser läuft weiter über die Harzmasse und spült langsam Salzreste aus, damit diese beim Einschalten der Betriebsphase nicht in das Trinkwasser gelangen können. Die aufeinander folgenden Arbeitsgänge »Besalzen« und »langsam Klarspülen« sind an sich nur als ein Arbeitsgang zu werten, wobei nach dem Absaugen der vorhandenen Salzsole noch genügend Zeit für das Klarspülen vorgesehen ist. Gelangt nun während des Betriebs durch den fortlaufenden Verbrauch die Oberfläche des Salzvorrats unterhalb des Wasserspiegels, so erhöht sich der Wasser- und damit Salzsolevorrat um den Volumenbetrag des fehlenden festen Salzvorrats in dem Behälter. Dies hat zur Folge, daß der vorgesehene Zeitraum zum Klarspülen verringert wird bzw. in einer extremen Lage völlig ausfällt, so daß Salzsole direkt ins Trinkwasser gelangen kann und somit nicht nur die Ursache von unangenehmer Geschmacksbelästigung und verdorbenen Speisen und Getränken, sondern auch die Ursache für Korrosion in Leitungen und Armaturen des Wasserversorgungsnetzes sein kann.

Bei einem Weiterbetreiben der Anlage würde sich der Salzvorrat hiernach völlig erschöpfen, so daß die Anlage ausfallen und nunmehr unbehandeltes, hartes Wasser in das Versorgungsnetz gegeben werden würde.

Der Erfindung liegt die Aufgabe zugrunde, ein kostengünstig zu realisierendes Verfahren und eine Vorrichtung zur Durchführung des Verfahrens zu schaffen, mit der eine Mindestmenge an Salzvorrat sicher angezeigt werden kann.

Diese Aufagbe wird erfindungsgemäß durch die im kennzeichnenden Teil des Anspruchs 1 bzw. des Anspruchs 4 angegebenen Merkmale gelöst. Weitere Ausgestaltungen der Erfindung sind in den Ansprüchen 2, 3, 5 bis 8 dargelegt.

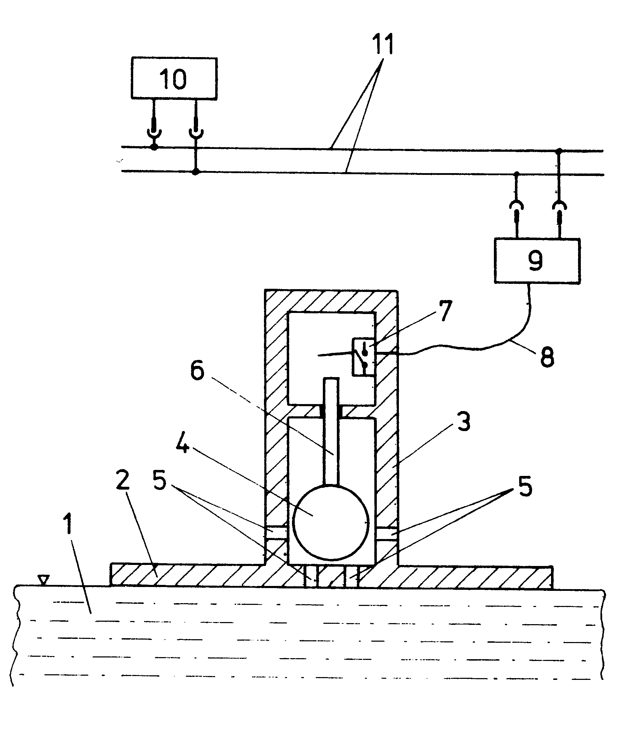

Ein Ausführungsbeispiel der Erfindung ist in der Zeichnung dargestellt und wird im folgenden näher beschrieben. Die einzige Figur der Zeichnung zeigt eine auf die Salzoberfläche aufsetzbare Sonde mit einem elektrischen Schaltplan.

Die Sonde oder Fühlglied besteht im wesentlichen aus einer ebenen Platte 2, die auf der Oberfläche des Salzvorrats 1 durch Schwerkraft aufliegt. Auf der Platte 2 ist senkrecht ein Gehäuse 3 zugeordnet, in dem ein Schwimmer 4 verschiebbar geführt und mittels Öffnungen 5 im Gehäuse 3 und der Platte 2 mit dem Außenraum verbunden ist. An dem Schwimmer 4 ist ein Stößel 6 vorgesehen, der mit einem Mikroschalter 7 zusammenwirkt. Als Mikroschalter kann vorzugsweise ein Reed Kontakt vorgesehen sein, der mit einem am Stößel 6 angeordneten Magnet betätigbar ist. Der Mikroschalter ist über eine flexible Leitung 8 mit einem Signalwandler 9 verbunden, der mit Hilfe eines Trägerfrequenzsystems ein Signal in das normale Stromversorgungsnetz abgeben kann. Sinkt nun bei einem fortlaufenden Betrieb die Oberfläche des Salzvorrats 1 unterhalb des Solespiegels, so erfährt der Schwimmer 4 durch die durch die Öffnungen 5 eindringende Flüssigkeit einen Auftrieb und erzeugt an dem Mikroschalter 7 einen Schaltvorgang, der in dem Signalwandler 9 ein Signal erzeugt und dieses über das gesamte Stromversorgungsnetz 11 abgibt. Von einem mit Hilfe einer Steckdosenverbindung mit dem Stromversorgungsnetz 11 an beliebiger Stelle gekoppelten Warneinrichtung 10, kann dieses Signal aufgenommen und entsprechend in ein optisches und/oder akustisches Warnsignal umgesetzt werden. Hierdurch wird in einfacher und sehr komfortabler Weise ein auftretender Salzmangel in der Wasseraufbereitungsanlage rechtzeitig und sicher angezeigt.

Natürlich können anstatt der Schwimmerschaltereinrichtung an der Platte 2 auch Elektroden oder andere Tastmittel angeordnet sein, die bei einem Eintauchen in Flüssigkeit dieses anzeigen und somit den Signalwandler 9 veranlassen, ein entsprechendes Signal über das Stromversorgungsnetz 11 abzugeben.

Selbstverständlich kann auch der Signalwandler 9 der Platte 2 fest zugeordnet in dem Gehäuse 3 integriert sein, so daß lediglich eine Kabelverbindung zur nächsten Steckdose des Stromversorgungsnetzes hergestellt werden muß.

Schließlich kann auch der Salzvorratsbehälter so gestaltet sein, daß durch den an der Platte 2 erfolgten Schaltvorgang beim Eintauchen in die Flüssigkeit automatisch ein Salznachfüllvorgang eingeleitet wird.

## Patentansprüche

1. Verfahren zur Überwachung des Salzvorrats (1) im Vorratsbehälter eines Wasserenthärters, dadurch gekennzeichnet, daß auf der Oberfläche des Salzvorrats (1) ein mit der Oberfläche bewegbares Fühlglied lose aufgelagert ist, welches beim Eintauchen in Flüssigkeit ein Signal erzeugt.

2. Verfahren nach Anspruch 1, dadurch gekennzeichnet, daß das von dem Fühlglied erzeugte Signal mit Hilfe eines Trägerfrequenzsystems auf ein Stromversorgungsnetz (11) gegeben wird und an beliebiger Stelle an dem Stromversorgungsnetz mit Hilfe einer Steckdosenverbindung eine Warneinrichtung (10) angeschlossen wird, die ein optisches und/oder akustisches Warnsignal erzeugt.

3. Verfahren nach Anspruch 1, dadurch gekennzeichnet, daß das von dem Fühlglied erzeugte Signal einen Salznachfüllvorgang einleitet.

4. Vorrichtung zur Durchführung des Verfahrens nach den Ansprüchen 1 und 2, dadurch gekennzeichnet, daß das Fühlglied aus einer auf der Oberfläche des Salzvorrats (1) liegenden Platte (2) besteht, an der ein Mittel zur Feststellung von Flüssigkeit vorgesehen ist, das mit einem Signalwandler (9) verbunden ist.

5. Vorrichtung nach Anspruch 4, dadurch gekennzeichnet, daß als Mittel zur Feststellung der Flüssigkeit ein der PLatte (2) zugeordneter Schwimmer (4) vorgesehen ist, der einen Mikroschalter (7) steuert.

6. Vorrichtung nach Anspruch 5, dadurch gekennzeichnet, daß der Mikroschalter ein magnetisch schaltbarer Reed Kontakt ist.

7. Vorrichtung nach Anspruch 4, dadurch gekennzeichnet, daß als Mittel zur Feststellung von Flüssigkeit der Platte (2) Elektroden zugeordnet sind, die beim Eintauchen in Flüssigkeit überbrückt werden.

8. Vorrichtung nach Anspruch 4, dadurch gekennzeichnet, daß der Signalwandler in dem Fühlglied integriert ist und direkt mit dem Stromversorgungsnetz über eine Steckdose verbunden ist.

## Claims

1. Method of monitoring the salt supply (1) in the storage container at a water softener, characterized in this, that a sensing member movable with the surface is loosely superposed on the surface of the salt supply (1), which sensing member generates a signal when it dips into a liquid.

2. Method according to claim 1, characterized in this, that the signal generated by the sensing member is applied to a power supply network (11) with the aid of a carrier frequency system and that a warning device (10) is connected to the power supply network at any desired place with the aid of a socket connection, said device generating an optical and/or acoustic warning signal.

3. Method according to claim 1, characterized in this, that the signal generated by the sensing member initiates a salt-replenishment process.

4. Device for implementing the method according to claim 1 and 2, characterized in this, that the sensing member consists of a plate (2) lying on the surface of the salt supply (1), on which plate there is provided a liquid-detecting means which is connected to a signal transducer (9).

5. Device according to claim 4, characterized in this, that a float (4) assigned to the plate (2) is provided as the liquid-detecting means, the said float controlling a microswitch.

6. Device according to claim 5, characterized in this, that the microswitch is a magnetically switchable dry-reed contact.

7. Device according to claim 4, characterized in this, that electrodes are assigned to the plate (2) as liquid-detecting means, said electrodes being bridged over on dipping into liquid.

8. Device according to claim 4, characterized in this, that the signal transducer is incorporated in the sensing member and connected direct to the power supply network via a socket.

## Revendications

1. Procédé de contrôle de la réserve de sel (1) dans le réservoir d'un adoucisseur d'eau, caractérisé en ce qu'un organe détecteur est supporté librement sur la surface de la réserve de sel (1), cet organe étant mobile avec la surface et engendrant un signal à l'immersion dans un liquide.

2. Procédé selon la revendication 1, caractérisé en ce que le signal engendré par l'organe détecteur est transmis, à l'aide d'un système à fréquence porteuse, à un réseau de fourniture de courant (11), et en ce qu'un dispositif avertisseur (10) produisant un signal d'avertissement optique et/ou acoustique est raccordé au réseau de fourniture de courant, en un endroit quelconque, à l'aide d'une liaison par prise de courant.

3. Procédé selon la revendication 1, caractérisé en ce que le signal engendré par l'organe détecteur initialise un processus de rétablissement du plein de sel.

4. Dispositif de mise en œuvre du procédé selon les revendications 1 et 2, caractérisé en ce que l'organe détecteur est constitué par une plaque (2) reposant sur la surface de la réserve de sel (1), plaque sur laquelle est prévu un moyen de détection de liquide, ce moyen étant relié à un convertisseur de signal (9).

5. Dispositif selon la revendication 4, caractérisé en ce qu'il est prévu, comme moyen de détection de liquide, un flotteur (4) qui est conjugé à la plaque (2) et qui commande un micro-interrupteur (7).

6. Dispositif selon la revendication 5, caractérisé en ce que le micro-interrupteur est un contact sous ampoule scellée manoeuvrable magnétiquement.

7. Dispositif selon la revendication 4, caractérisé en ce que des électrodes qui sont shuntées lors de la plongée dans le liquide sont conjuguées à la plaque (2), cela en tant que moyen de détection de liquide.

8. Dispositif selon la revendication 4, caractérisé en ce que le convertisseur de signal est intégré dans l'organe détecteir et est directement relié au réseau de fourniture de courant, par une prise de courant.